Europäisches Patentamt

European Patent Office

Office européen des brevets

(19)

(11)  **EP 0 592 307 B1**

(12)  # FASCICULE DE BREVET EUROPEEN

(45) Date de publication et mention
de la délivrance du brevet:
**02.04.1997  Bulletin 1997/14**

(51) Int Cl.[6]: **G01S 1/02**

(21) Numéro de dépôt: **93402455.5**

(22) Date de dépôt: **06.10.1993**

(54) **Procédé d'estimation de l'erreur commise dans le calcul de la position d'un mobile par un récepteur GPS, et récepteur GPS pour la mise en oeuvre de ce procédé**

Schätzungsverfahren des Fehlers in der Positionsberechnung eines Fahrzeuges mittels eines GPS Empfängers, und ein GPS Empfänger zur Durchführung des Verfahrens

Estimation procedure for the error in the position calculation for a mobile by a GPS receiver, and GPS receiver for the application of the procedure

(84) Etats contractants désignés:
**DE FR GB IT**

(30) Priorité: **08.10.1992  FR 9211960**

(43) Date de publication de la demande:
**13.04.1994  Bulletin 1994/15**

(73) Titulaire: **ALCATEL ESPACE
F-92400 Courbevoie (FR)**

(72) Inventeur: **Karouby, Philippe
F-31500 Toulouse (FR)**

(74) Mandataire:
**Pothet, Jean Rémy Emile Ludovic et al
ALCATEL ALSTHOM,
Département de Propriété Industrielle,
30, avenue Kléber
75116 Paris (FR)**

(56) Documents cités:
• **PATENT ABSTRACTS OF JAPAN vol. 13, no. 209 (P-871)17 Mai 1989 & JP-A-01 026 177 (FURUNO ELECTRIC CO LTD) 21 Juillet 1989**
• **IEEE PLANS'88 POSITION LOCATION AND NAVIGATION SYMPOSIUM, Nov. 29- Dec.2 1988, Kissemmee, FI, US; CARIVEAU ET AL: 'Satellite Data Management in DoD Navstar GPS Receivers'**
• **NAVIGATION: JOURNAL OF THE INSTITUTE OF NAVIGATION, Vol.25, No.2, Summer 1978, US. MILLIKEN ET AL: 'Principle of Operation of NAVSTAR and System Characteristics', pages 95-106**
• **PROCEEDINGS OF THE IEEE, Vol.71, No.10, Oct. 1983, New York, US; PARKINSON ET AL: 'NAVSTAR: Global Positioning System - Ten Years Later', pages 1177-1186.**
• **TOUTE L'ELECTRONIQUE, No. 511, Févr. 86, Paris, FR; 'Navigation et positionnement par satellite: le système Navstar-GPS', pages 54-62.**

**Description**

La présente invention concerne un procédé d'estimation de l'erreur commise dans le calcul de la position spatiale et temporelle d'un mobile par un récepteur GPS.

Le système GPS (Global Positioning System) est un système bien connu mis au point pour déterminer, à partir de la position, connue à chaque instant, d'un certain nombre de satellites, la position spatiale et temporelle d'un mobile muni d'un récepteur adapté au système, dit récepteur GPS, et capable de recevoir et de traiter les données fournies par les satellites du système. Le système GPS comporte dix-huit satellites disposés de sorte que la plupart des points de la Terre soient "visibles" par au moins quatre satellites. Actuellement, on utilise jusqu'à neuf satellites pour déterminer la position d'un mobile sur la Terre, mais on comprend bien que seuls quatre satellites sont nécessaires pour déterminer la position spatiale et temporelle qui dépend de quatre variables : x, y et z, coordonnées spatiales du mobile dans un référentiel prédéterminé, et t, coordonnée temporelle du mobile (c'est-à-dire date à laquelle le mobile se trouve à la position calculée, cette date étant donnée dans le système de temps universel).

Le récepteur GPS associé à un mobile comprend des moyens lui permettant :

- de sélectionner un ensemble de quatre satellites (ou plus) parmi tous les satellites en vue depuis le point où se trouve le mobile associé,
- de calculer, à partir des données fournies par les satellites sélectionnés, les positions spatiale et temporelle du mobile associé.

Le système GPS classique garantit de manière sûre à 95% une erreur maximale de 100 mètres sur la position horizontale calculée et de 157 mètres sur la position verticale calculée. En d'autres termes, il y a 95% de chances que l'erreur sur la position horizontale soit inférieure ou égale à 100 mètres et que l'erreur sur la position verticale soit inférieure ou égale à 157 mètres. On dit que le système GPS garantit une précision globale, cette précision globale étant une constante du système.

Habituellement, on utilise un critère de sélection des quatre satellites à utiliser par le récepteur GPS pour le calcul de position. Ce critère permet de sélectionner, parmi toutes les constellations, c'est-à-dire tous les ensembles, de quatre satellites possibles à partir de tous les satellites en vue, celle qui permet d'obtenir, dans le calcul de position, la précision globale garantie par le système GPS. Ce critère, noté C, est proportionnel à

$$\sqrt{\mathrm{Tr}[(A^T.A)^{-1}]}$$

où :

- la matrice A donnée par :

$$A = \begin{pmatrix} \alpha_{11} & \alpha_{12} & \alpha_{13} & 1 \\ \alpha_{21} & \alpha_{22} & \alpha_{23} & 1 \\ \alpha_{31} & \alpha_{32} & \alpha_{33} & 1 \\ \alpha_{41} & \alpha_{42} & \alpha_{43} & 1 \end{pmatrix},$$

$\alpha_{ij}$, pour i variant de 1 à 4 et j variant de 1 à 3, étant le cosinus directeur de l'angle entre le j-ième axe de coordonnées et la droite joignant le mobile au i-ième satellite, les indices 1, 2 et 3 étant respectivement associés aux axes des abscisses, des ordonnées et des cotes,

- Tr symbolise la trace de la matrice $(A^T.A)^{-1}$, c'est-à-dire la somme de ses coefficients diagonaux, $A^T$ est la transposée de la matrice A et $(A^T.A)^{-1}$ l'inverse de la matrice $A^T.A$.

Le coefficient de proportionnalité utilisé dans le calcul de C prend en compte toutes les marges d'imprécision du système GPS. Ce coefficient, constant, a donc une valeur très importante, et ce pour des questions de sécurité que l'on comprend bien.

Le critère C est associé à un seuil de tolérance, de sorte que s'il dépasse ce seuil, on suppose que la constellation correspondante ne permet pas de garantir la précision globale ; le récepteur GPS sélectionne alors une autre constellation de quatre satellites, et ainsi de suite jusqu'à trouver le constellation correspondant à une valeur de C inférieure au seuil de tolérance.

Compte tenu de la valeur importante du coefficient de proportionnalité, le critère C est systématiquement pénalisé. Ainsi, il peut arriver qu'une constellation soit rejetée parce qu'elle ne satisfait pas au critère global C alors qu'en pratique, la précision qu'elle permet d'obtenir sur la position spécifique calculée est tout de même acceptable.

D'autre part, dans certaines applications, comme par exemple la construction de tunnels, l'installation d'antennes de satellites, les rallyes sportifs, la navigation de plaisance, entre autres, le récepteur GPS peut effectuer le calcul de position en intégrant sur des durées très importantes, de sorte que les différents bruits sont minimisés et que la position calculée a finalement une précision plus grande que la précision globale garantie par le système GPS.

Ceci n'est pas possible dans d'autres applications, comme l'aviation civile notamment. En effet, dans ce cas, il n'est pas possible d'attendre pour permettre au système d'intégrer sur une durée importante. La précision obtenue est alors la précision globale garantie, ce qui n'est pas suffisant dans le domaine de l'aviation. De plus, les 5% d'incertitude sont intolérables, on le comprend bien, dans ce domaine.

En conséquence, compte tenu des dangers qu'il fait encourir, le système GPS classique n'a actuellement qu'un usage restreint aux applications dans lesquelles il n'est pas très pénalisant de calculer la position en intégrant sur des durées très importantes.

L'utilisation du critère C est donc d'une part trop contraignante et pénalisante, et d'autre part insuffisamment précise dans de nombreuses applications.

Dans le domaine militaire, le système GPS utilise une fréquence de transmission différente de celle du système classique. Dans ce cas, les données transmises sont codées et impossibles à déchiffrer par un utilisateur du domaine civil qui ne possède pas le décodeur adapté. Le système GPS garantit alors à 95% une erreur maximale de 30 mètres dans les trois dimensions. Le critère C utilisé est le même.

La globalité de la précision garantie dans ce cas, et l'utilisation du critère C, posent les mêmes problèmes que l'utilisation du système GPS dans le domaine civil.

On pourrait alors penser à utiliser une méthode d'estimation de l'erreur commise lors du calcul de position par le récepteur GPS. Une telle méthode est décrite par exemple dans la demande de brevet JP-1 026 177. L'erreur de mesure estimée, fonction de la position calculée, est obtenue en multipliant cette dernière par un coefficient représentant la dégradation de la précision géométrique obtenue selon le système GPS (dénommé par exemple GDOP, HDOP ou PDOP dans ce système).

Ce coefficient est caractéristique des marges d'imprécisions globales du système GPS. Ainsi l'erreur estimée selon ce procédé est encore une erreur globale qui n'est pas satisfaisante dans de nombreuses applications et pose ainsi le même problème que le critère C.

Un but de la présente invention est par conséquent de mettre au point un procédé permettant de fournir à l'utilisateur du système GPS classique une estimation de l'erreur sur la position calculée, cette estimation étant plus précise que celle obtenue dans la méthode de l'art antérieur.

Un autre but de la présente invention est de permettre une sélection plus affinée de la constellation de satellites à utiliser dans le calcul de la position d'un mobile.

La présente invention propose à cet effet un procédé d'estimation de l'erreur commise dans le calcul, par un récepteur GPS porté par un mobile, de la position spatiale et temporelle dudit mobile dans un référentiel prédéterminé, les coordonnées de ladite position étant notées x, y, z et t, où x, y et z sont respectivement l'abscisse, l'ordonnée et la cote dudit mobile dans ledit référentiel, et t la date, dans le système de temps universel, à laquelle ledit mobile se trouve dans la position (x, y, z), ladite position étant calculée à partir de données fournies par au moins quatre satellites du système GPS sélectionnés par ledit récepteur GPS pour former une constellation dite de calcul, ladite estimation de l'erreur étant représentée par un vecteur noté $\varepsilon$ dont les composantes sont respectivement l'estimée de l'erreur sur l'abscisse dx, l'estimée de l'erreur sur l'ordonnée dy, l'estimée de l'erreur sur la cote dz et l'estimée de l'erreur temporelle c.dt, c étant la célérité de la lumière dans le vide, ladite estimation étant effectuée par ledit récepteur GPS pour chaque position calculée, caractérisé en ce que $\varepsilon$ est donné par la relation :

$$\varepsilon_r = K.\varepsilon$$

où :

- K est une matrice à N lignes et quatre colonnes, N étant le nombre de satellites que comporte ladite constellation, telle que :

$$K = \begin{pmatrix} \alpha_{11} & \alpha_{11} & \alpha_{13} & 1 \\ \alpha_{21} & \alpha_{11} & \alpha_{23} & 1 \\ \cdot & \cdot & \cdot & \cdot \\ \cdot & \cdot & \cdot & \cdot \\ \cdot & \cdot & \cdot & \cdot \\ \alpha_{N1} & \alpha_{N2} & \alpha_{N3} & 1 \end{pmatrix}$$

$\alpha_{ij}$, pour i variant de 1 à N et j variant de 1 à 3, étant le cosinus directeur de l'angle entre le j-ième axe de coordonnées et la droite joignant ledit mobile au i-ième satellite de ladite constellation, les indices 1, 2 et 3 étant respectivement associés aux axes des abscisses, des ordonnées et des cotes,

- $\varepsilon_r$ est un vecteur à N composantes notées $URE_1$ à $URE_N$, où $URE_i$, pour i variant de 1 à N, est une donnée fournie par ledit i-ième satellite et donnant l'écart radial moyen entre la position théorique du i-ième satellite et sa position réelle sur la droite joignant ledit i-ième satellite à un point de la zone géographique de la Terre vue par ledit i-ième satellite, la moyenne étant effectuée sur les points de ladite zone géographique où se trouve une station de relais au sol du système GPS.

La solution apportée par l'invention provient de la constatation que la caractéristique URE (User Range Error) fournie par le système GPS régulièrement dans le temps, permet d'évaluer l'erreur commise lors de chaque calcul de position. En pondérant le vecteur $\varepsilon_r$ par la matrice K, on obtient alors la meilleure estimée de l'erreur commise dans le calcul de la position.

Le procédé selon l'invention permet ainsi d'obtenir une estimation de la précision de la position calculée, non plus globale, mais associée à une zone géographique relativement petite, de sorte que l'erreur estimée peut être assimilée à l'erreur réelle sur la position calculée.

En outre, on estime l'erreur commise lors de chaque calcul de position. Ceci permet à l'utilisateur d'accepter ou de rejeter la position calculée, selon que l'erreur commise dans le calcul de cette position et estimée au moyen du procédé de l'invention dépasse ou non un seuil de tolérance prédéterminé par exemple.

De manière très avantageuse, la constellation comporte au plus tous les satellites du système GPS visibles depuis le mobile.

Plus le nombre de satellites utilisés dans le calcul est important, plus la fiabilité des résultats obtenus avec le procédé selon l'invention est grande.

Lorsque N est strictement supérieur à 4, la résolution de l'équation précédente par la méthode des moindres carrés conduit à la solution suivante donnant la meilleure estimée E de ε :

$$E = (K_T.K)^{-1}.K^T.\varepsilon_r.$$

Afin de fournir à l'utilisateur un critère facilement exploitable, le procédé selon l'invention peut comporter en outre les opérations suivantes :

- une valeur P, appelée précision, est calculée à partir des composantes de ε ou de E, cette précision étant donnée par la formule :

$$P = \sqrt{dx^2 + dy^2 + dz^2 + (c.dt)^2} \, ,$$

- P est comparée à un seuil de tolérance préalablement fixé,
- si P dépasse le seuil précédent, le récepteur GPS peut soit sélectionner une autre constellation de calcul, soit rejeter la position calculée.

Si l'on utilise E au lieu de ε, on remplace les composantes de ε par celles de E dans le calcul de P.

L'invention concerne également un récepteur GPS adapté à la mise en oeuvre du procédé qui vient d'être décrit.

D'autres caractéristiques et avantages de la présente invention apparaîtront dans la description suivante donnée à titre d'exemple illustratif et nullement limitatif.

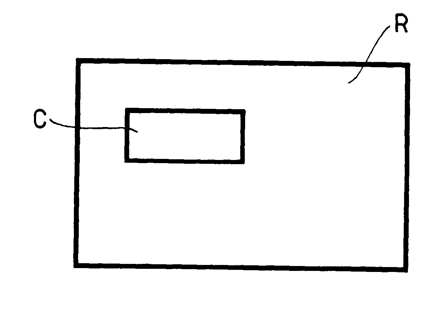

Dans la figure unique, on a représenté de manière très schématique les éléments d'un récepteur GPS utilisés pour la mise en oeuvre du procédé selon l'invention.

Il est possible d'obtenir de manière théorique une équation faisant intervenir le vecteur e représentant l'erreur commise sur la position calculée et dont les composantes sont respectivement l'erreur sur l'abscisse, l'erreur sur l'ordonnée, l'erreur sur la cote et l'erreur temporelle. Cette équation est la suivante :

$$\delta_r = A.e \qquad\qquad (1),$$

où $\delta_r$ est un vecteur à quatre composantes notées $\Delta R_1$ à $\Delta R_4$. $\Delta R_i$, pour i variant de 1 à 4, est un biais théorique. L'équation (1) est utilisée classiquement pour prouver que le critère C est suffisant pour garantir la précision globale sur la position calculée.

On pourrait penser à utiliser cette équation pour mettre en oeuvre le procédé de l'invention et déterminer l'erreur exacte commise sur le calcul de position. Toutefois, les $\Delta R_i$ sont des données théoriques qui n'ont pas de réalité physique, c'est-à-dire qui n'existent pas, au niveau du système GPS. Ces données théoriques correspondent aux erreurs radiales moyennes sur la distance entre chaque point de la terre et le satellite considéré. Il est bien évident qu'une telle donnée n'est pas calculable.

Le mode de mise en oeuvre préféré de la présente invention repose sur le fait que, pour avoir une bonne estimation du vecteur e, on peut remplacer, dans l'équation (1), les $\Delta R_i$ par des données notées $URE_i$ dont on va à présent expliquer l'origine et l'intérêt.

Dans le système GPS, chaque satellite est associé à une valeur d'URE (User Range Error). Pour déterminer l'URE relatif à un satellite donné, toutes les stations de relais au sol situées en vue du satellite considéré calculent l'écart radial, c'est-à-dire l'écart sur la droite station au sol-satellite, entre la position réelle du satellite et sa position théorique sur la trajectoire prévue avant le lancement. Cela est possible puisque chaque station au sol connaît exactement sa propre position. Ainsi, chaque station au sol fait calculer sa position par les satellites du système et en déduit la position réelle de ces derniers à partir de la différence entre sa position calculée et sa position exacte. L'URE est alors calculé comme la moyenne des écarts radiaux déterminés par toutes les stations au sol situées en vue du satellite considéré.

L'URE est une donnée ayant une réalité physique au niveau du système GPS. Elle est par conséquent accessible au récepteur GPS. Elle varie au cours du temps et avec la zone géographique dans laquelle se trouve le mobile.

De plus, les URE sont calculés et rechargés régulièrement au niveau des satellites par les stations au sol, de sorte qu'ils évoluent avec la dérive du satellite.

Enfin, l'URE de chaque satellite est affecté d'un biais qui peut permettre au récepteur GPS d'estimer et de tenir compte de l'évolution de l'URE entre deux chargements depuis les stations au sol.

Ainsi, le calcul effectué en remplaçant les $\Delta R_i$ par les $URE_i$ dans l'équation (1) permet, comme cela a été expliqué plus haut, d'estimer de manière rigoureuse le vecteur e.

Pour estimer e, le récepteur GPS commence par sélectionner une constellation de satellites de la même manière que celle décrite dans le préambule, c'est-à-dire à l'aide du critère C éventuellement généralisé pour pouvoir utiliser N satellites, où N est supérieur ou égal à 4 et inférieur ou égal au nombre de satellites visibles par le mobile.

Si N est égal à 4, on peut calculer directement un vecteur $\varepsilon$, dont les composantes sont l'estimée de l'erreur sur l'abscisse, notée dx, l'estimée de l'erreur sur l'ordonnée, notée dy, l'estimée de l'erreur sur la cote, notée dz, et l'estimée de l'erreur temporelle notée c.dt, par l'équation

$$\varepsilon_r = K.\varepsilon,$$

où :

- K est une matrice à N lignes et quatre colonnes telle que :

$$K = \begin{pmatrix} \alpha_{11} & \alpha_{11} & \alpha_{13} & 1 \\ \alpha_{21} & \alpha_{11} & \alpha_{23} & 1 \\ \cdot & \cdot & \cdot & \cdot \\ \cdot & \cdot & \cdot & \cdot \\ \cdot & \cdot & \cdot & \cdot \\ \alpha_{N1} & \alpha_{N2} & \alpha_{N3} & 1 \end{pmatrix}$$

$\alpha_{ij}$, pour i variant de 1 à N et j variant de 1 à 3, étant le cosinus directeur de l'angle entre le j-ième axe de coordonnées et la droite joignant le mobile au i-ième satellite, les indices 1, 2 et 3 étant respectivement associés aux axes des abscisses, des ordonnées et des cotes,

- $\varepsilon_r$ est un vecteur à N composantes notées $URE_1$ à $URE_N$, où $URE_i$, pour i variant de 1 à N, est la valeur de l'URE associée au i-ième satellite.

Lorsque N est strictement supérieur à 4, il y a plus d'équations que d'inconnues. La meilleure estimée E de $\varepsilon$ est alors donnée, en utilisant la méthode des moindres carrés, par l'équation suivante :

$$E = (K^T.K)^{-1}.K^T.\varepsilon_r,$$

où $K^T$ est la transposée de la matrice K et où $(K^T.K)^{-1}$ est l'inverse de la matrice $(K^T.K)$.

Dans certaines applications, on peut utiliser directement les composantes de E (notées Dx, Dy, Dz et c. Dt). Dans ce cas, par exemple, on aura défini au préalable un vecteur de référence $E_{réf}$, et la comparaison des composantes de même rang des vecteurs E et $E_{réf}$ permet de conserver la position calculée ou de la rejeter si les écarts entre certaines des coordonnées de E et de $E_{réf}$ sont trop importants.

Il est toutefois préférable d'effectuer la comparaison sur les normes des vecteurs E et $E_{réf}$. On calcule ainsi une valeur, appelée précision et notée P, définie par la formule :

$$P = \sqrt{dx^2 + dy^2 + dz^2 + (c.Dt)^2},$$

où Dx, Dy, Dz et c.Dt sont les composantes de E.

Les considérations précédentes concernant le calcul de P s'appliquent également en remplaçant E par $\varepsilon$ et Dx, Dy, Dz et c.Dt respectivement par dx, dy, dz et c.dt.

Si P dépasse un seuil $P_{réf}$, déterminé au préalable en fonction de la précision recherchée, le récepteur GPS peut par exemple l'indiquer à l'utilisateur à l'aide d'une alarme visuelle ou sonore. Le résultat de la comparaison entre P et $P_{réf}$ peut également servir à poursuivre le programme implanté dans le récepteur d'une manière différente, en générant par exemple un bit à zéro ou à un selon que P est inférieure ou supérieure à $P_{réf}$.

L'invention permet donc d'établir un critère de rejet simple et très fiable de la position calculée par le récepteur GPS. S'il y a rejet, le récepteur peut sélectionner une autre constellation, et effectuer le calcul de position une seconde fois. Si la précision n'est pas encore satisfaisante, le récepteur GPS sélectionne d'autres constellations jusqu'à ce que la précision souhaitée soit obtenue.

Dans le cas de l'utilisation dans l'aviation civile, l'utilisateur peut, grâce à l'invention, soit accepter la position calculée par le récepteur GPS si la précision déterminée selon l'invention est suffisante, soit rejeter cette position et faire appel à la centrale inertielle de l'avion pour déterminer sa position.

Dans les applications où l'intégration sur de longues durées est acceptable, l'invention permet de raccourcir de manière significative les temps de calcul, ce qui est également très avantageux.

Le procédé selon l'invention peut être implanté sans problème sur une carte C à l'intérieur d'un récepteur GPS référencé R sur la figure. Les URE sont prélevés très facilement dans le message fourni par chaque satellite de la constellation choisie par le récepteur, et le calcul de E est rapide puisqu'il ne comprend qu'une inversion de matrice carrée d'ordre égal au maximum à 9 ou 10 et des produits de matrices.

Bien entendu, l'invention n'est pas limitée au mode de réalisation qui vient d'être décrit et l'on pourra remplacer tout moyen par un moyen équivalent sans sortir du cadre de l'invention.

## Revendications

1. Procédé d'estimation de l'erreur commise dans le calcul, par un récepteur GPS porté par un mobile, de la position spatiale et temporelle dudit mobile dans un référentiel prédéterminé, les coordonnées de ladite position étant notées x, y, z et t, où x, y et z sont respectivement l'abscisse, l'ordonnée et la cote dudit mobile dans ledit référentiel, et t la date, dans le système de temps universel, à laquelle ledit mobile se trouve dans la position (x, y, z), ladite position étant calculée à partir de données fournies par au moins quatre satellites du système GPS sélectionnés par ledit récepteur GPS pour former une constellation dite de calcul,

ladite estimation de l'erreur étant représentée par un vecteur noté ε dont les composantes sont respectivement l'estimée de l'erreur sur l'abscisse dx, l'estimée de l'erreur sur l'ordonnée dy, l'estimée de l'erreur sur la cote dz et l'estimée de l'erreur temporelle c.dt, c étant la célérité de la lumière dans le vide, ladite estimation étant effectuée par ledit récepteur GPS pour chaque position calculée, caractérisé en ce que ε est donné par la relation :

$$\varepsilon_r = K.\varepsilon$$

où :

- K est une matrice à N lignes et quatre colonnes, N étant le nombre de satellites que comporte ladite constellation, telle que :

$$K = \begin{pmatrix} \alpha_{11} & \alpha_{11} & \alpha_{13} & 1 \\ \alpha_{21} & \alpha_{11} & \alpha_{23} & 1 \\ \cdot & \cdot & \cdot & \cdot \\ \cdot & \cdot & \cdot & \cdot \\ \cdot & \cdot & \cdot & \cdot \\ \alpha_{N1} & \alpha_{N2} & \alpha_{N3} & 1 \end{pmatrix}$$

$\alpha_{ij}$, pour i variant de 1 à N et j variant de 1 à 3, étant le cosinus directeur de l'angle entre le j-ième axe de coordonnées et la droite joignant ledit mobile au i-ième satellite de ladite constellation, les indices 1, 2 et 3 étant respectivement associés aux axes des abscisses, des ordonnées et des cotes,
- $\varepsilon_r$ est un vecteur à N composantes notées $URE_1$ à $URE_N$, où $URE_i$, pour i variant de 1 à N, est une donnée fournie par ledit i-ième satellite et donnant l'écart radial moyen entre la position théorique du i-ième satellite et sa position réelle sur la droite joignant ledit i-ième satellite à un point de la zone géographique de la Terre vue par ledit i-ième satellite, la moyenne étant effectuée sur les points de ladite zone géographique où se trouve une station de relais au sol du système GPS.

2. Procédé selon la revendication 1 caractérisé en ce que ladite constellation comporte au plus tous les satellites du système GPS visibles depuis ledit mobile.

3. Procédé selon l'une des revendications 1 ou 2 caractérisé en ce que, lorsque N est strictement supérieur à 4, la meilleure estimée E de est donnée par la formule suivante :

$$E = (K^T.K)^{-1}.K^T.\varepsilon_r,$$

où $K^T$ est la transposée de la matrice K, et l'on utilise E à la place de ε en remplaçant les composantes dx, dy, dz et c.dt de ε respectivement par les composantes notées Dx, Dy, Dz et c.Dt de E.

4. Procédé selon l'une des revendications 1 à 3 caractérisé en ce qu'il comporte en outre les opérations suivantes :

- une valeur P, appelée précision, est calculée à partir des composantes de ε, ladite précision étant donnée par la formule :

$$P = \sqrt{dx^2 + dy^2 + dz^2 + (c.dt)^2},$$

- P est comparée à un seuil de tolérance préalablement fixé,
- ledit récepteur GPS sélectionne une autre constellation si P dépasse ledit seuil.

5. Procédé selon l'une des revendications 1 à 3 caractérisé en ce qu'il comporte en outre les opérations suivantes :

- une valeur P, appelée précision, est calculée à partir des composantes de ε, ladite précision étant donnée par la formule :

$$P = \sqrt{dx^2 + dy^2 + dz^2 + (c.dt)^2},$$

- P est comparée à un seuil de tolérance préalablement fixé,
- ledit récepteur GPS indique que ladite position calculée est à rejeter.

**Patentansprüche**

1. Verfahren zur Abschätzung des bei der Berechnung der räumlichen und zeitlichen Position eines Fahrzeugs in einem vorgegebenen Bezugssystem durch einen DPS-Empfänger in dem Fahrzeug begangenen Fehlers, wobei die Koordinaten der Position mit x, y, z und t bezeichnet werden und x, y und z die Werte der Abszisse, Ordinate und Raumachse des Fahrzeugs in dem Bezugssystem und t der Zeitpunkt im Universalzeitsystem sind, in dem das Fahrzeug sich in der Position (x, y, z) befindet, wobei diese Position ausgehend von Daten berechnet wird, die von mindestens vier Satelliten des GPS-Systems geliefert werden, welche vom Empfänger GPS für eine Rechenkonstellation ausgewählt werden,

wobei der Fehlerschätzwert durch einen Vektor ε repräsentiert wird, dessen Komponenten die Fehlerschätzwerte bezüglich des Abszisse dx, der Ordinate dy und der Raumachse dz sowie bezüglich der Zeitachse c·dt sind und c die Lichtgeschwindigkeit im Vakuum ist, wobei diese Abschätzung im GPS-Empfänger für jede berechnete Position erfolgt, dadurch gekennzeichnet, daß ε durch folgende Gleichung gegeben ist:

$$\varepsilon_r = K \cdot \varepsilon$$

wobei gilt:

- K ist eine Matrix mit N Zeilen und vier Spalten, wobei N die Anzahl von Satelliten der Konstellation ist, wie folgt:

$$K = \begin{pmatrix} \alpha_{11} & \alpha_{11} & \alpha_{13} & 1 \\ \alpha_{21} & \alpha_{11} & \alpha_{23} & 1 \\ \cdot & \cdot & \cdot & \cdot \\ \cdot & \cdot & \cdot & \cdot \\ \cdot & \cdot & \cdot & \cdot \\ \alpha_{N1} & \alpha_{N2} & \alpha_{N3} & 1 \end{pmatrix}$$

  wobei $a_{ij}$, mit i von 1 bis N und j von 1 bis 3, der Richt-kosinus des Winkels zwischen der j-ten Koordinatenachse und der Geraden zwischen dem Fahrzeug und dem i-ten Satelliten der Konstellation ist und die Indices 1, 2, und 3, der Abszissen-, Ordinaten- und der Raumachse zugeordnet sind,
- $\varepsilon_r$ ist ein Vektor mit N Komponenten $URE_1$ bis $URE_N$, wobei $URE_i$ mit i von 1 bis N variierend eine Größe ist, die vom i-ten Satelliten geliefert wird und den mittleren radialen Unterschied zwischen der theoretischen Position des i-ten Satelliten und seiner tatsächlichen Position auf der Geraden zwischen dem i-ten Satelliten und einem Punkt der vom i-ten Satelliten sichtbaren geographischen Zone auf der Erde ist und wobei die Mittelung über die Punkte der geographischen Zone erfolgt, in der sich eine Relaisbodenstation des GPS-Systems befindet.

2. Verfahren nach Anspruch 1, dadurch gekennzeichnet, daß die Konstellation höchstens alle von dem Fahrzeug aus sichtbaren Satelliten des GPS-Systems enthält.

3. Verfahren nach einem der Ansprüche 1 oder 2, dadurch gekennzeichnet, daß der beste Schätzwert E von ε, wenn N deutlich größer als 4 ist, durch folgende Formel gegeben ist:

$$E = (K_T \cdot K)^{-1} \cdot K^T \cdot \varepsilon_r$$

wobei $K^T$ die Transponierte der Matrix K ist und E anstelle von ε verwendet wird, indem die Komponenten dx, dy, dz und c·dt von ε durch die Komponenten Dx, Dy, Dz und c·Dt von E ersetzt werden.

4. Verfahren nach einem der Ansprüche 1 bis 3, dadurch gekennzeichnet, daß es weiter die folgenden Schritte enthält:

- ein Genauigkeitswert P wird berechnet ausgehend von den Komponenten von ε gemäß folgender formel:

$$P = \sqrt{dx^2 + dy^2 + dz^2 + (c \cdot dt)^2}$$

- P wird mit einer vorher festgelegten Toleranzschwelle verglichen,
- der GPS-Empfänger wählt eine andere Konstellation, wenn P die Schwelle überschreitet.

5. Verfahren nach einem der Ansprüche 1 bis 3, dadurch gekennzeichnet, daß es außerdem die folgenden Schritte aufweist:

- ein Genauigkeitswert P wird ausgehend von den Komponenten von ε berechnet gemäß folgender Formel:

$$P = \sqrt{dx^2 + dy^2 + dz^2 + (c \cdot dt)^2}$$

- P wird mit einer vorher festgelegten Toleranzschwelle verglichen,
- der GPS-Empfänger gibt an, ob die berechnete Position zu verwerfen ist.

**Claims**

1. Method of estimating the error occurring in the calculation by a GPS receiver carried by a mobile of the spatial and temporal position of said mobile in a predetermined frame of reference in which x, y and z are respectively the abscissa, ordinate and third coordinate of said position and $\underline{t}$ is the date in universal time at which said mobile is at the position (x, y, z), said position being calculated from data supplied by at least four GPS satellites selected by said GPS receiver to form a calculation constellation,

said estimate of the error being represented by a vector $\varepsilon$ whose components are respectively the estimated error on the abscissa dx, the estimated error on the ordinate dy, the estimated error on the third coordinate dz and the estimated time error c. dt where $\underline{c}$ is the speed of light in vacuum, said estimate being effected by said GPS receiver for each calculated position, characterised in that $\varepsilon$ is given by the equation:

$$\varepsilon_r = K.\varepsilon$$

where:

- K is a matrix with N rows and four columns where N is the number of satellites in said constellation such that:

$$K = \begin{pmatrix} \alpha_{11} & \alpha_{11} & \alpha_{13} & 1 \\ \alpha_{21} & \alpha_{11} & \alpha_{23} & 1 \\ . & . & . & . \\ . & . & . & . \\ . & . & . & . \\ \alpha_{N1} & \alpha_{N2} & \alpha_{N3} & 1 \end{pmatrix}$$

$\alpha_{ij}$ for $\underline{i}$ varying from 1 through N and $\underline{j}$ varying from 1 through 3 being the direction cosine of the angle between the jth coordinate axis and the straight line segment joining said mobile to the ith satellite of said constellation, the subscripts 1, 2 and 3 being respectively associated with the abscissa, ordinate and third coordinate axes,

- $\varepsilon_r$ is a vector with N components $URE_1$ through $URE_N$ where $URE_i$ for $\underline{i}$ varying from 1 through N is a datum supplied by said ith satellite giving the mean radial error between the theoretical position of said ith satellite and its actual position on the straight line segment joining said ith satellite to a point in the geographical area on the Earth seen by said ith satellite, the mean being calculated at the points of said geographical area at which a GPS ground station is located.

2. Method according to claim 1 characterised in that said constellation comprises at most all of the GPS satellites visible from said mobile.

3. Method according to claim 1 or claim 2 characterised in that if N is greater than 4 the best estimate E of $\varepsilon$ is given by the equation:

$$E = (K^T.K)^{-1}.K^T.\varepsilon_r,$$

where $K^T$ is the transpose of the matrix K and E is used instead of $\varepsilon$ by replacing the respective components dx, dy, dz and c.dt of $\varepsilon$ by the components Dx, Dy, Dz and c.Dt of E.

4. Method according to any one of claims 1 to 3 characterised in that it further comprises the following operations:

- a precision P is calculated from the components of $\varepsilon$ by the equation:

$$P = \sqrt{dx^2 + dy^2 + dz^2 + (c.dt)^2} ,$$

- P is compared with a predetermined tolerance threshold, and
- said GPS receiver selects another constellation if P is above said threshold.

5. Method according to any one of claims 1 to 3 characterised in that it further comprises the following operations:

- a precision P is calculated from the components of $\varepsilon$ by the equation:

$$P = \sqrt{dx^2 + dy^2 + dz^2 + (c.dt)^2} ,$$

- P is compared with a predetermined tolerance threshold, and
- said GPS receiver indicates that said calculated position is to be rejected.

R

C